# EUROPEAN PATENT APPLICATION

(11) **EP 4 835 290 A1**
(43) Date of publication of application: **04.11.2026**
(21) Application number: 24911144.4
(22) Date of filing: 24.12.2024
(51) Int. Cl.: F03D 13/10, F03D 13/25, F03D 1/00

(54) **INSTALLATION METHOD FOR OFFSHORE WIND TURBINE**

(30) Priority: 29.12.2023 CN 202311870080
(71) Applicant: Jiangsu Goldwind Science & Technology Co., Ltd., Yancheng, Jiangsu 224100 (CN); Goldwind Pioneer Technology (Yancheng) Co., Ltd., Yancheng, Jiangsu 224001 (CN)
(72) Inventor: SHEN, Xingxing, Yancheng, Jiangsu 224100 (CN); ZHANG, Zhu, Yancheng, Jiangsu 224100 (CN); CHENG, Wei, Yancheng, Jiangsu 224100 (CN)
(74) Representative: Hoffmann Eitle
(86) International application number: PCT/CN2024/141999
(87) International publication number: WO 2025/140219

(57) **Abstract**

An installation method for an offshore wind turbine, comprising: providing a docking device (100), and movably fixing the docking device to a floating foundation (200), the docking device comprising an annular body (10) and a docking cavity penetrating therethrough; connecting a compensation device (300) to a hoisting appliance (400), the hoisting appliance being connected to a hoisted object by means of the compensation device; using the hoisting appliance to hoist a support tower (500), and inserting the support tower into the docking cavity and connecting same to the floating foundation (200); moving the docking device to the end of the support tower away from the floating foundation in the axial direction of the support tower and movably fixing same to the outer wall of the support tower; and using the compensation device to hoist a power generation assembly, the power generation assembly comprising a rotor, a nacelle (700) and a connection tower (800) connected to the nacelle, and inserting the connection tower into the docking cavity and connecting same to the support tower. The method improves the capability of installing offshore wind turbines and reduces installation costs.

## Description

### CROSS REFERENCE TO RELATED APPLICATION

The present disclosure claims priority to Chinese Patent Application No. 202311870080.1, filed on December 29, 2023 and entitled "INSTALLATION METHOD FOR OFFSHORE WIND TURBINE", the entire content of which is incorporated herein by reference.

### TECHNICAL FIELD

The present disclosure relates to the technical field of wind power generation, and in particular, relates to a method for installing an offshore wind turbine.

### BACKGROUND

With the continued advancement of offshore wind power technology, offshore wind turbines have gradually developed toward larger capacities. Meanwhile, as nearshore sea areas become increasingly saturated, offshore wind power projects have gradually developed toward deep-water offshore areas.

Currently, the construction process of offshore floating wind turbines mainly involves assembling a wind turbine onto a floating foundation at a dock using a crane, then transporting it to an offshore installation site by wet towing, and fixing it in place to complete the installation of the offshore wind turbine.

However, for large-capacity wind turbines, both the weight and height of such systems increase. At present, there is no larger or more suitable crane available at a dock to perform the assembly work for large-capacity systems. Even if the cranes are available, the load-bearing capacity of the dock is very limited and cannot support the hoisting work for heavy-load systems. Therefore, the installation of large-capacity offshore wind turbines needs to be improved.

### SUMMARY

Embodiments of the present disclosure provide a method for installing an offshore wind turbine, which can achieve direct offshore installation of the wind turbine, adapt to offshore installation conditions, improve the installation capability for offshore wind turbines, and reduce installation costs.

Embodiments of the present disclosure provide a method for installing an offshore wind turbine, including:
providing a docking apparatus, movably mounting the docking apparatus on a floating foundation, the docking apparatus including an annular body and a docking cavity extending through the annular body;
connecting a compensation apparatus to a hoisting tool, the hoisting tool being connected to a to-be-hoisted object through the compensation apparatus, the compensation apparatus including a fixed mechanism and an adjustment mechanism, the adjustment mechanism being disposed on the fixed mechanism and configured to move relative to the fixed mechanism to absorb shaking of the to-be-hoisted object;
installing a support tower by hoisting the support tower using the compensation apparatus and inserting the support tower into the docking cavity to be connected to the floating foundation;
moving the docking apparatus along an axial direction of the support tower to an end of the support tower away from the floating foundation, so that the docking apparatus is movably mounted on an outer wall of the support tower;
installing a power generation assembly which includes a rotor, a nacelle, and an adapter tower connected to the nacelle, by hoisting the power generation assembly using the compensation apparatus and inserting the adapter tower into the docking cavity to be connected to the support tower.

In an aspect of embodiments of the present disclosure, the support tower includes a plurality of tower sections, and the step of installing the support tower by hoisting the support tower using the compensation apparatus and inserting the support tower into the docking cavity to connect the support tower to the floating foundation includes:
installing a first tower section by hoisting the first tower section using the compensation apparatus and inserting the first tower section into the docking cavity to be connected to the floating foundation;
moving the docking apparatus along the axial direction to an end of the first tower section away from the floating foundation to fix the docking apparatus;
installing a second tower section by hoisting the second tower section using the compensation apparatus and inserting the second tower section into the docking cavity to be connected to the first tower section;
repeating the above steps to hoist the remaining tower sections until all the tower sections are connected to each other to obtain the support tower.

In an aspect of embodiments of the present disclosure, the docking apparatus includes a limiting body which is disposed at an end of the annular body and protrudes toward the docking cavity, the limiting body includes a limiting protrusion, the tower sections include a connecting plate protruding from an outer wall thereof, and the connecting plate includes a connecting hole.

The step of hoisting the second tower section by using the compensation apparatus and inserting the second tower section into the docking cavity to be connected to the first tower section includes: engaging the connecting plate of the second tower section with the limiting body and inserting the limiting protrusion into the connecting hole, so that the limiting body supports the second tower section.

In an aspect of embodiments of the present disclosure, the docking apparatus includes a telescopic assembly, one end of the telescopic assembly being connected to the limiting body and the other end being connected to the annular body.

After the step of engaging the connecting plate of the second tower section with the limiting body and inserting the limiting protrusion into the connecting hole so that the limiting body supports the second tower section, the method further includes: controlling the telescopic assembly to contract toward the docking cavity, so that the limiting body and the second tower section are driven to move toward the first tower section until the second tower section is engaged with the first tower section.

In an aspect of embodiments of the present disclosure, the docking apparatus includes a rotating member which is disposed at an end of the annular body and connected to the limiting body.

Before the step of engaging the connecting plate of the second tower section with the limiting body and inserting the limiting protrusion into the connecting hole so that the limiting body supports the second tower section, the method further includes: controlling the rotating member to rotate along a circumferential direction of the first tower section to drive the limiting body to rotate, until a mating reference line of the limiting body matches a mating reference line of the first tower section.

In an aspect of embodiments of the present disclosure, the compensation apparatus includes a rotary member, the rotary member being connected to the adjustment mechanism and configured to drive the adjustment mechanism to rotate.

The step of installing the second tower section by hoisting the second tower section using the compensation apparatus and inserting the second tower section into the docking cavity to be connected to the first tower section includes: driving the adjustment mechanism to rotate by using the rotary member to drive the second tower section to rotate, until a mating reference line of the second tower section matches a mating reference line of the first tower section.

In an aspect of embodiments of the present disclosure, the docking apparatus includes a locking member which is disposed on the annular body.

The step of moving the docking apparatus along an axial direction of the support tower to an end of the support tower away from the floating foundation to fix the docking apparatus includes: fixing the docking apparatus on the support tower by using the locking member.

In an aspect of embodiments of the present disclosure, the locking member includes a fixing pin, the outer wall of the support tower has a moving guide rail, and the moving guide rail has a positioning hole.

The step of moving the docking apparatus along the axial direction of the support tower to the end of the support tower away from the floating foundation to fix the docking apparatus includes: moving the docking apparatus along the moving guide rail to the end of the support tower away from the floating foundation, and then inserting the fixing pin into a positioning hole to fix the docking apparatus on the support tower.

In an aspect of embodiments of the present disclosure, the annular body includes a first annular body and a second annular body which are movably connected, the first annular body and the second annular body together define an adjustable docking cavity, and the step of moving the docking apparatus along the axial direction of the support tower to the end of the support tower away from the floating foundation to fix the docking apparatus includes:
fixing the second annular body and moving the first annular body along the axial direction toward a side gradually away from the second annular body, wherein a space of the docking cavity is adjusted;
after the first annular body moves to the end of the support tower away from the floating foundation, fixing the first annular body and moving the second annular body along the axial direction toward a side gradually approaching the first annular body;
after the second annular body moves to the end of the support tower away from the floating foundation, fixing the second annular body, and together with the first annular body defining an adjusted docking cavity.

In an aspect of embodiments of the present disclosure, the compensation apparatus includes a sling which is connected to the adjustment mechanism and has an adjustable position on the adjustment mechanism, and the step of installing the support tower by hoisting the support tower using the compensation apparatus and inserting the support tower into the docking cavity to connect the support tower to the floating foundation includes:
adjusting a position of the sling relative to the adjustment mechanism, so that the sling has the same extending direction as the support tower;
connecting the sling to the support tower and hoisting the support tower.

In an aspect of embodiments of the present disclosure, before the step of installing the power generation assembly by hoisting the power generation assembly using the compensation apparatus and inserting the adapter tower into the docking cavity to be connected to the support tower, the method further includes:
providing an installation platform, an installation column being disposed on the installation platform;
installing a nacelle assembly onto the installation column by hoisting the nacelle assembly, the nacelle assembly including a nacelle, a hub connected to the nacelle, and the adapter tower, the nacelle assembly being connected to the installation column through the adapter tower;
hoisting and mounting a plurality of blades onto the hub to obtain the rotor.

In an aspect of embodiments of the present disclosure, a plurality of connection ports are disposed on the hub, and the step of hoisting and mounting the plurality of blades onto the hub to obtain the rotor includes:
rotating the hub so that an opening of any one of the connection ports faces a horizontal direction;
hoisting any one of the blades along the horizontal direction to the connection port to mount the blade onto the connection port;
repeating the above process until the plurality of blades are hoisted and mounted onto the plurality of connection ports respectively.

In an aspect of embodiments of the present disclosure, the nacelle assembly further includes a yaw system, the nacelle assembly being connected to the installation column through the yaw system, and after the step of hoisting and mounting the plurality of blades onto the hub to obtain the rotor, the method further includes: rotating the nacelle and the rotor by using the yaw system, so that the rotor has a hoisting space.

Embodiments of the present disclosure provide a method for installing an offshore wind turbine. The docking apparatus is installed on a floating foundation, a support tower is inserted into the docking cavity of the docking apparatus by using a compensation apparatus, and then the support tower is connected to the floating foundation, so that the docking apparatus may provide a preliminary docking position for the support tower and fix the support tower, while the compensation apparatus may buffer the hoisting process and overcome shaking during offshore operations, making the installation process of the support tower more stable and suitable for the offshore operating environment and satisfying the installation conditions. The power generation assembly is then hoisted by using the compensation apparatus and likewise docked and fixed through the docking apparatus, achieving the installation of the offshore wind turbine. The cooperation of the docking apparatus and the compensation apparatus improves the stability of the offshore hoisting process, provides the capability to perform offshore hoisting operations, and reduces risks during the hoisting process. In addition, the offshore installation operations avoid operations at a dock, obviating the need to replace large cranes and reinforce the dock, thereby saving installation costs.

### BRIEF DESCRIPTION OF THE DRAWINGS

Features, advantages, and technical effects of the exemplary embodiments of the present disclosure will be described below with reference to the accompanying drawings.
FIG. 1 is a flowchart of a method for installing an offshore wind turbine according to embodiments of the present disclosure;
FIG. 2 is a process diagram of the method for installing an offshore wind turbine according to embodiments of the present disclosure;
FIG. 3 is a process diagram of the method for installing an offshore wind turbine according to embodiments of the present disclosure;
FIG. 4 is a process diagram of the method for installing an offshore wind turbine according to embodiments of the present disclosure;
FIG. 5 is a process diagram of the method for installing an offshore wind turbine according to embodiments of the present disclosure;
FIG. 6 is a process diagram of the method for installing an offshore wind turbine according to embodiments of the present disclosure;
FIG. 7 is a process diagram of the method for installing an offshore wind turbine according to embodiments of the present disclosure;
FIG. 8 is a process diagram of the method for installing an offshore wind turbine according to embodiments of the present disclosure;
FIG. 9 is a process diagram of the method for installing an offshore wind turbine according to embodiments of the present disclosure;
FIG. 10 is a schematic structural view of a docking apparatus according to embodiments of the present disclosure; and
FIG. 11 is a schematic structural view of a compensation apparatus according to embodiments of the present disclosure.

### Reference numerals:

100, docking apparatus; 200, floating foundation; 300, compensation apparatus; 400, hoisting tool; 500, support tower; 501, first tower section; 502, second tower section; 600, blade; 700, nacelle; 800, adapter tower;
10, annular body; 11, first annular body; 12, second annular body; 20, fixed mechanism; 30, adjustment mechanism; 40, limiting body; 41, limiting protrusion;
50, telescopic assembly; 60, rotating member; 70, rotary member; 80, locking member; 90, sling;
1, installation platform; 2, installation column.
In the drawings, the same components are denoted by the same reference numerals. The drawings are not drawn to actual scale.

### DETAILED DESCRIPTION

Features and exemplary embodiments of various aspects of the present disclosure will be described in detail below. In the following detailed description, numerous specific details are provided in order to provide a thorough understanding of the present disclosure. However, it will be apparent to those skilled in the art that the present disclosure may be practiced without some of these specific details. The description of the embodiments below is merely for the purpose of providing a better understanding of the present disclosure by way of examples of the present disclosure. In the drawings and the following description, at least some well-known structures and techniques are not shown in order to avoid unnecessarily obscuring the present disclosure; and, for clarity, the dimensions of some structures may be exaggerated. Furthermore, the features, structures, or characteristics described below may be combined in any suitable manner in one or more embodiments.

The directional terms appearing in the following description are all directions shown in the drawings, and are not intended to limit the method for installing an offshore wind turbine of the present disclosure. In the description of the present disclosure, it should also be noted that unless otherwise expressly specified and limited, the terms "install" and "connect" should be understood in a broad sense. For example, it may be a fixed connection, a detachable connection, or an integrated connection; it may be a direct connection or an indirect connection. For those of ordinary skill in the art, the specific meanings of the above terms in the present disclosure may be understood according to the specific circumstances.

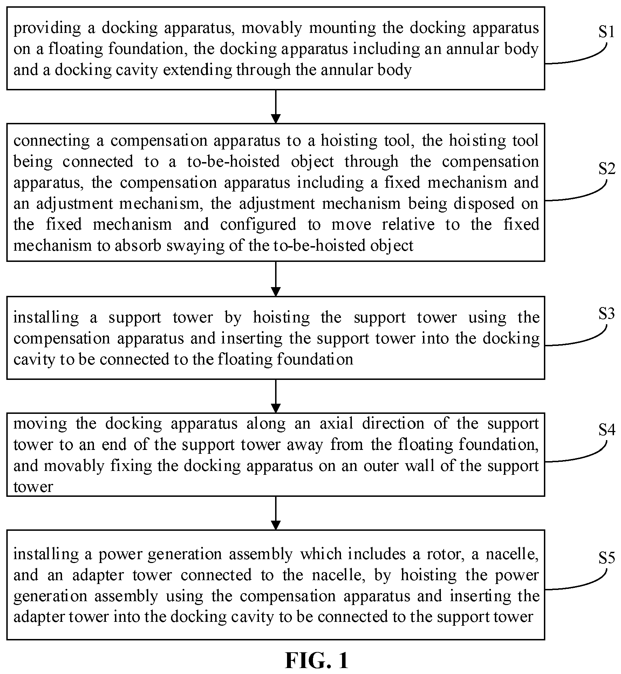

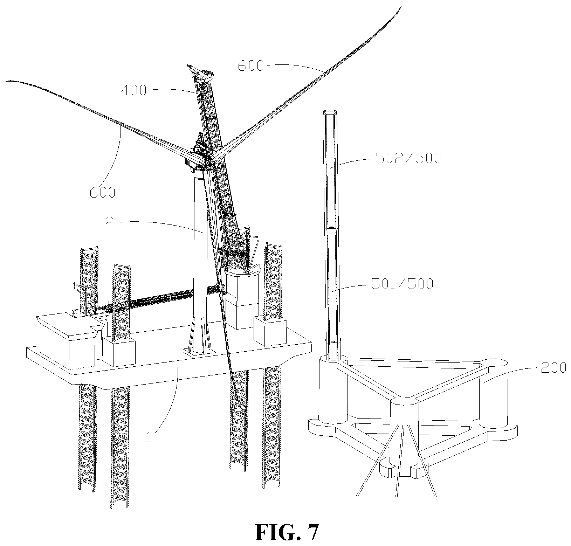

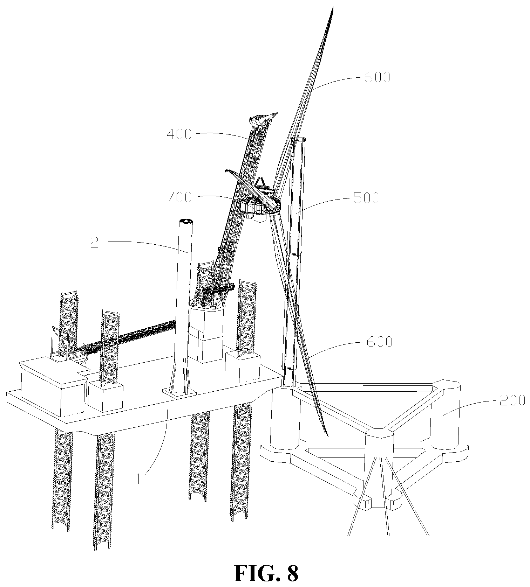

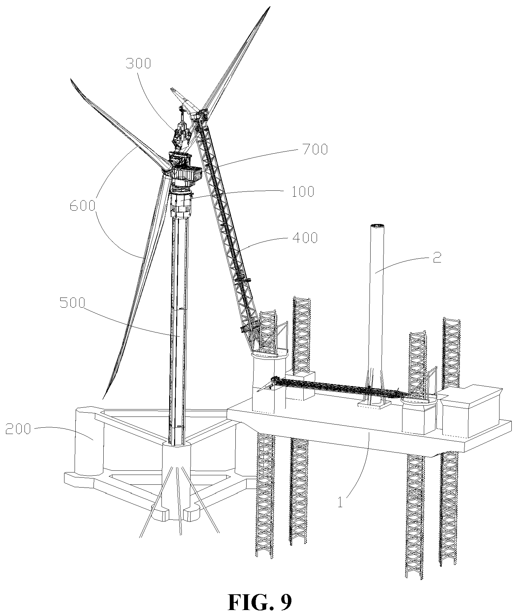

To better understand the present disclosure, the method for installing an offshore wind turbine according to embodiments of the present disclosure will be described in detail below with reference to FIGS. 1 to 11.

Referring to FIG. 1, embodiments of the present disclosure provide a method for installing an offshore wind turbine including:
S1, providing a docking apparatus 100, movably mounting a docking apparatus 100 on a floating foundation 200, the docking apparatus 100 including an annular body 10 and a docking cavity extending through the annular body 10;
S2, connecting a compensation apparatus 300 to a hoisting tool 400, the hoisting tool 400 being connected to a to-be-hoisted object through the compensation apparatus 300, the compensation apparatus 300 including a fixed mechanism 20 and an adjustment mechanism 30, the adjustment mechanism 30 being disposed on the fixed mechanism 20 and configured to move relative to the fixed mechanism 20 to absorb shaking of the to-be-hoisted object;
S3, installing the support tower 500 by hoisting the support tower 500 using the compensation apparatus 300 and inserting the support tower 500 into the docking cavity to be connected to the floating foundation 200;
S4, moving the docking apparatus 100 along an axial direction of the support tower 500 to an end of the support tower 500 away from the floating foundation 200, so that the docking apparatus 100 is movably fixed on an outer wall of the support tower 500;
S5, installing the power generation assembly which includes a rotor, a nacelle 700, and an adapter tower 800 connected to the nacelle 700, by hoisting the power generation assembly using the compensation apparatus 300 and inserting the adapter tower 800 into the docking cavity to be connected to the support tower 500.

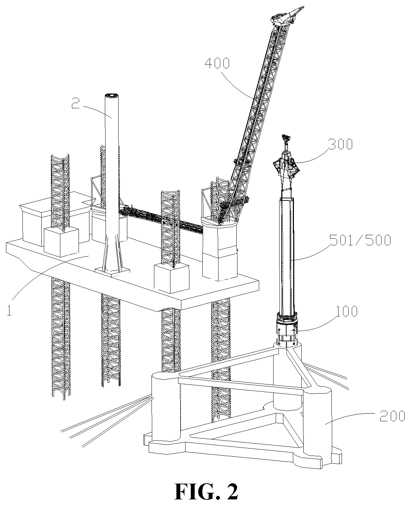

As shown in FIG. 2, in step S1, it is necessary to provide the docking apparatus 100. The docking apparatus 100 is an annular body 10 structure, having a docking cavity. The docking cavity is an annular cavity structure, and its function is to accommodate a tower structure and to preliminarily fix an end portion of the tower during the installation process.

It can be understood that the radial dimension of the annular body 10 of the docking apparatus 100 is larger than the radial dimension of the tower, so that during the hoisting and docking process, the tower can be smoothly inserted into the annular body 10 of the docking apparatus 100. Optionally, the docking apparatus 100 forms a bolted connection with a flange on the offshore floating foundation 200 via the annular body 10.

In step S2, a hook on the hoisting tool 400 is configured to connect the compensation apparatus 300, and then the compensation apparatus 300 is connected to the to-be-hoisted object. The main structure of the compensation apparatus 300 comprises two parts: the fixed mechanism 20 and the adjustment mechanism 30, which are movably connected. The adjustment mechanism 30 is configured to move relative to the fixed mechanism 20. The main function of the compensation apparatus 300 is to buffer shaking during the hoisting process by using the adjustment mechanism 30.

Specifically, when strong wind or waves cause shaking during hoisting, the adjustment mechanism 30 in the compensation apparatus 300 is configured to automatically move relative to the fixed mechanism 20, thereby offsetting the shaking of the to-be-hoisted object and providing effective compensation and buffering against the shaking, so that the hoisted object remains in a relatively stationary state at all times and the docking process can proceed smoothly.

In the subsequent step S3, the support tower 500 is hoisted by using the compensation apparatus 300. When the support tower 500 is subjected to wind force, the compensation apparatus 300 at this time is configured to absorb the shaking of the support tower 500, so that the support tower 500 remains in a relatively stationary state at all times during the docking process with the docking apparatus 100, thereby enabling the support tower 500 to be precisely docked with the docking apparatus 100.

Since serving as an annular cavity, the docking cavity provides accommodation for the support tower 500 during docking, and further provides fixing for an end portion of the support tower 500. After being gradually inserted into the docking cavity, the support tower 500 is bolted to the floating foundation 200 at the bottom.

After the connection of the support tower 500 and the floating foundation 200 is completed, in step S4, the docking apparatus 100 at the bottom is moved continuously upward until reaching the top end of the support tower 500. At the same time, the docking apparatus 100 is movably mounted to the outer wall of the support tower 500 to prepare for the next docking.

Optionally, the docking apparatus 100 may be moved upward by a pneumatic cylinder structure, or may employ a variety of other driving methods, and it may be fixed by abutting against the outer wall of the tower, or may be fixed by inserting. The moving manner or fixing manner of the docking apparatus 100 is not specially limited in the present disclosure.

After the installation of the support tower 500 described above is completed, in step S5, the compensation apparatus 300 described above is further used to hoist the power generation assembly, i.e., components such as the rotor and the nacelle 700.

It should be noted that in this step, it is necessary to pre-install the adapter tower 800 at the bottom of the nacelle 700. The purpose is to form an insertion connection with the docking apparatus 100 on the support tower 500, thereby connecting the nacelle 700 to the support tower 500. The adapter tower 800 mainly serves as a transfer connection. This is because the nacelle 700 is not convenient to be hoisted directly onto the support tower 500; the housing of the nacelle 700 is relatively thin, and the docking opening is relatively small, so that direct hoisting tends to cause damage.

Similarly, under the action of the compensation apparatus 300, the power generation assembly has better stability during hoisting. The compensation apparatus 300 is configured to absorb shaking during hoisting, so that the power generation assembly remains in a relatively stationary state at all times, and ensures smooth docking with the support tower 500 through the adapter tower 800.

Optionally, for hoisting of the power generation assembly, the rotor and the nacelle 700 may be separately hoisted at sea, or they may be pre-assembled as a whole at a dock and then transported as a whole to the sea for hoisting.

Embodiments of the present disclosure provide a method for installing an offshore wind turbine. The docking apparatus 100 is installed on the floating foundation 200, the support tower 500 is inserted into the docking cavity of the docking apparatus 100 by using the compensation apparatus 300, and then the support tower 500 is connected to the floating foundation 200, so that the docking apparatus 100 may provide a preliminary docking position for the support tower 500 and fix it, while the compensation apparatus 300 may buffer the hoisting process and overcome shaking during offshore operations, enabling the installation process of the support tower 500 more stable and suitable for the offshore operating environment and satisfying the installation conditions. The power generation assembly is then hoisted by using the compensation apparatus 300 and likewise docked and fixed through the docking apparatus 100, achieving the installation of the offshore wind turbine. The cooperation of the docking apparatus 100 and the compensation apparatus 300 improves the stability of the offshore hoisting process, provides the capability for hoisting operations at sea, and reduces risks during the hoisting process. In addition, the offshore installation operations avoid operations at a dock, obviating the need to replace large cranes and reinforce the dock, thereby saving installation costs.

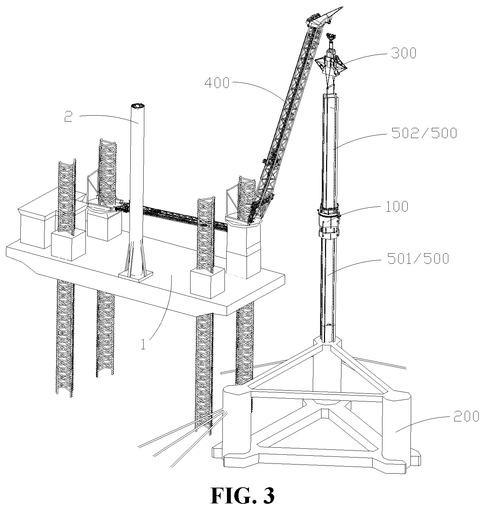

As an optional embodiment, referring to FIGS. 2 and 3, the support tower 500 includes a plurality of tower sections. The step of installing the support tower 500 by hoisting the support tower 500 using the compensation apparatus 300 and inserting the support tower 500 into the docking cavity to connect the support tower 500 to the floating foundation 200 includes:
S31, installing the first tower section 501 by hoisting the first tower section 501 using the compensation apparatus 300 and inserting the first tower section 501 into the docking cavity to be connected to the floating foundation 200;
S32, moving the docking apparatus 100 along the axial direction to an end of the first tower section 501 away from the floating foundation 200 and fixing it;
S33, installing the second tower section 502 by hoisting the second tower section 502 using the compensation apparatus 300 and inserting the second tower section 502 into the docking cavity to be connected to the first tower section 501;
S34, repeating the above steps to hoist the remaining tower sections until all the tower sections are connected to each other to obtain the support tower 500.

Optionally, the support tower 500 may be divided into a plurality of tower sections. During the hoisting of the support tower 500, the plurality of tower sections may be transported to the sea, and each tower section may be hoisted one by one to obtain the final support tower 500. The number of sections of the support tower 500 is not specially limited in the present disclosure.

In step S31, the first tower section 501 is hoisted first. The first tower section 501 needs to be docked with the docking apparatus 100 connected to the floating foundation 200. Similarly, the compensation apparatus 300 is configured to hoist the first tower section 501 to absorb the shaking of the first tower section 501. After being inserted into the docking cavity, the first tower section 501 is bolted to the bottom flange on the floating foundation 200.

At this time, in step S32, the docking apparatus 100 is moved continuously upward along the axial direction of the tower, and is fixed when reaching the top end of the first tower section 501. The moving manner and fixing manner of the docking apparatus 100 are the same as those described in the above steps, and will not be repeated here.

In step S33, the compensation apparatus 300 is further configured to hoist the second tower section 502. The second tower section 502 is inserted into the docking apparatus 100 at the top end of the first tower section 501, and is bolted to the end flange on the first tower section 501. This step is the connection between tower sections.

Specifically, it is necessary to take into account the specific number of tower sections, and in step S34, the above is repeated until all tower sections are connected, thereby obtaining the complete support tower (500). Throughout the process, the docking apparatus (100) is configured to dock with each tower section to provide preliminary fixing, and the compensation apparatus (300) is for hoisting and absorbing shaking until all tower sections are smoothly connected.

Embodiments of the present disclosure provide a method for installing an offshore wind turbine. By dividing the support tower 500 into a plurality of tower sections, stable hoisting of each tower section is achieved by using the docking apparatus 100 and the compensation apparatus 300, which facilitates the transportation of the tower sections at sea, while stability during hoisting is increased.

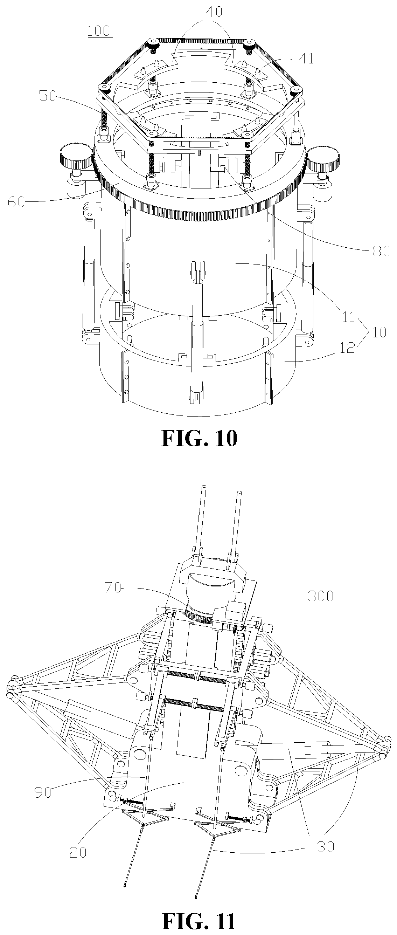

As an optional embodiment, referring to FIG. 3 in combination with FIG. 10, the docking apparatus 100 includes a limiting body 40. The limiting body 40 is disposed at one end of the annular body 10 and protrudes toward the docking cavity. The limiting body 40 includes a limiting protrusion 41. The tower section includes a connecting plate protruding from an outer wall, and the connecting plate includes a connecting hole.

The step of installing the second tower section 502 by hoisting the second tower section 502 using the compensation apparatus 300 and inserting the second tower section 502 into the docking cavity to be connected to the first tower section 501 includes: engaging the connecting plate of the second tower section 502 with the limiting body 40, wherein the limiting protrusion 41 is inserted into the connecting hole, so that the limiting body 40 supports the second tower section 502.

In this embodiment, the limiting body 40 is disposed in the docking apparatus 100, and a corresponding outwardly-extending connecting plate is disposed on an outer wall of the tower section to increase the bearing capacity of the docking apparatus 100 for the tower section when the tower section is inserted into the docking cavity.

When the second tower section 502 is inserted into the docking cavity, the connecting plate on a side wall of the second tower section 502 abuts against the outwardly-extending limiting body 40 of the docking apparatus 100 through the connecting hole, specifically by inserting the limiting protrusion 41 on the limiting body 40 into the connecting hole, achieving an engagement between the connecting plate of the second tower section 502 and the limiting body 40 of the docking apparatus 100. The limiting body 40 supports the second tower section 502.

After the engagement is achieved, a bottom flange hole of the second tower section 502 is located below the limiting body 40 in the docking cavity, and is engaged with a top flange hole of the first tower section 501.

Embodiments of the present disclosure provide a method for installing an offshore wind turbine. The limiting body 40 in the docking apparatus 100 abuts against the connecting plate on the tower section to achieve support for the tower section, improving stability during the docking process of the tower section.

As an optional embodiment, referring to FIG. 3 in combination with FIG. 10, the docking apparatus 100 includes a telescopic assembly 50. One end of the telescopic assembly 50 is connected to the limiting body 40, and the other end is connected to the annular body 10.

After the step of engaging the connecting plate of the second tower section 502 with the limiting body 40 and inserting the limiting protrusion 41 into the connecting hole so that the limiting body 40 supports the second tower section 502, the method further includes: controlling the telescopic assembly 50 to contract toward the docking cavity, so that the limiting body 40 and the second tower section 502 are driven to move toward the first tower section 501 until the second tower section 502 is engaged with the first tower section 501.

In this embodiment, it is mainly considered that after the second tower section 502 is inserted into the docking cavity, there is still a spacing between an end flange at the bottom of the second tower section 502 and an end flange at the top of the first tower section 501, which prevents the two from achieving an engagement. Therefore, the telescopic assembly 50 is disposed in the docking apparatus 100 in this embodiment.

Specifically, the telescopic assembly 50 is connected between the limiting body 40 and the annular body 10, and the telescopic assembly 50 is configured to perform telescopic movement in an axial direction to drive the limiting body 40 to move relative to the annular body 10.

During the hoisting process of the second tower section 502, the connecting plate on a side wall of the second tower section 502 abuts against the limiting body 40 in the docking apparatus 100. Therefore, when the limiting body 40 moves downward along with the telescopic assembly 50, the second tower section 502 is driven to move, and the second tower section 502 moves toward the first tower section 501 until engaged with the first tower section 501.

Optionally, the telescopic assembly 50 may be disposed around a circumferential direction of the tower to uniformly drive the tower section to perform telescopic movement. In this case, the telescopic assembly 50 may have a variety of structural forms, and the specific structural form of the telescopic assembly 50 is not specially limited in the present disclosure, provided that it can drive the tower section to move in the axial direction.

Embodiments of the present disclosure provide a method for installing an offshore wind turbine. The telescopic assembly 50 is disposed in the docking apparatus 100 and is connected between the annular body 10 and the limiting body 40. The tower section abutting against the limiting body 40 is driven to move by using the telescopic performance of the telescopic assembly 50, thereby shortening the distance between the tower sections during the docking process, enabling end flanges of the two to be fully engaged, and providing support for subsequent installation of bolts and torque tightening.

As an optional embodiment, referring to FIG. 3 in combination with FIG. 10, the docking apparatus 100 includes a rotating member 60. The rotating member 60 is disposed on one end of the annular body 10 and connected to the limiting body 40.

Before the step of engaging the connecting plate of the second tower section 502 with the limiting body 40 and inserting the limiting protrusion 41 into the connecting hole so that the limiting body 40 supports the second tower section 502, the method further includes: controlling, until a mating reference line of the limiting body 40 matches a mating reference line of the first tower section 501, the rotating member 60 to rotate along a circumferential direction of the first tower section 501 to drive the limiting body 40 to rotate.

Optionally, the rotating member 60 is disposed in the docking apparatus 100, and by using the rotating member 60 connected to the limiting body 40, the limiting body 40 is enabled to perform rotation adjustment.

The purpose of performing rotation adjustment on the limiting body 40 is to match the mating reference line of the limiting body 40 with the mating reference line of the first tower section 501 at the bottom, so that the docking apparatus 100 moved to the top of the first tower section 501 has the same installation state as the first tower section 501, thereby providing a basis for precise docking of the second tower section 502.

Specifically, before the second tower section 502 is hoisted, rotation adjustment is performed by using the rotating member 60, and the rotating member 60 is configured to drive the limiting body 40 to rotate in the circumferential direction until the limiting body 40 has the same mating reference line as the first tower section 501 at the bottom, at which point the rotation of the rotating member 60 is stopped.

Optionally, the rotating member 60 may adopt different structural forms, for example, driving a ring gear to rotate by gear transmission. The specific structure of the rotating member 60 is not specially limited in the present disclosure, provided that it can drive the limiting body 40 to perform rotation adjustment.

Embodiments of the present disclosure provide a method for installing an offshore wind turbine. The rotating member 60 is disposed in the docking apparatus 100 to drive the limiting body 40 to perform rotation adjustment. The limiting body 40 has a mating reference line matching that of the first tower section 501, providing support for subsequent precise docking between the second tower section 502 and the first tower section 501.

As an optional embodiment, referring to FIG. 3 in combination with FIG. 10, the compensation apparatus 300 includes a rotary member 70. The rotary member 70 is connected to the adjustment mechanism 30 and configured to drive the adjustment mechanism 30 to rotate.

The step of installing the second tower section 502 by hoisting the second tower section 502 using the compensation apparatus 300 and inserting the second tower section 502 into the docking cavity to be connected to the first tower section 501 includes: driving, until a mating reference line of the second tower section 502 matches a mating reference line of the first tower section 501, the adjustment mechanism 30 to rotate by using the rotary member 70, so that the second tower section 502 is driven to rotate.

To match the mating reference line of the second tower section 502 with that of the first tower section 501, optionally, by disposing the rotary member 70 in the compensation apparatus 300, the mating reference line of the second tower section 502 may be adjusted by using the rotary member 70 during the hoisting process of the second tower section 502 to match the reference line of the limiting body 40 in the docking apparatus 100, that is, to match the reference line of the first tower section 501, thereby achieving precise docking between the second tower section 502 and the first tower section 501.

During the hoisting of the second tower section 502, the second tower section 502 is connected to the adjustment mechanism 30 in the compensation apparatus 300 through the sling 90. By using a movement characteristic of the adjustment mechanism 30 relative to the fixed mechanism 20, shaking is buffered. Meanwhile, the rotary member 70 is configured to drive the adjustment mechanism 30 to rotate, thereby driving the connected second tower section 502 to rotate to achieve the adjustment of the mating reference line of the second tower section 502 until it matches that of the first tower section 501.

Optionally, the rotary member 70 may rotate by way of gear transmission, and may be disposed at the top of the fixed mechanism 20 and the adjustment mechanism 30, so as to drive the fixed mechanism 20 and the adjustment mechanism 30 to rotate simultaneously. The specific structure or rotation form of the rotary member 70 is not specially limited in the present disclosure, provided that it can perform rotation adjustment on the reference line of the second tower section 502.

Embodiments of the present disclosure provide a method for installing an offshore wind turbine. The rotary member 70 is disposed in the compensation apparatus 300, and rotation adjustment during the hoisting process of the tower section is achieved, so that its mating reference line matches that of the docking apparatus 100, thereby enabling smooth and precise docking of the tower section, having better adjustability, and providing convenience for the docking process.

As an optional embodiment, referring to FIG. 3 in combination with FIG. 10, the docking apparatus 100 includes a locking member 80 which is disposed on the annular body 10.

The step of moving the docking apparatus 100 along an axial direction of the support tower 500 to an end of the support tower 500 away from the floating foundation 200 so that the docking apparatus 100 is fixed includes: fixing the docking apparatus 100 on the support tower 500 by using the locking member 80.

After the support tower 500 is inserted into the docking apparatus 100 and connected to the floating foundation 200 by bolts, the docking apparatus 100 at this position has achieved the docking, and needs to be moved upward along the axial direction of the tower until reaching the top end of the support tower 500.

To fix the docking apparatus 100 on a side wall at the top end of the support tower 500, the device is locked by the locking member 80 in this embodiment. The structure of the locking member 80 is not specially limited in the present disclosure, and it may be a fixed manner, such as insertion or abutment.

Embodiments of the present disclosure provide a method for installing an offshore wind turbine. The locking member 80 is disposed in the docking apparatus 100, which facilitates the fixation of the docking apparatus 100 after the docking apparatus 100 is moved along the axial direction, providing support for a subsequent docking process.

As an optional embodiment, the locking member 80 includes a fixing pin. The outer wall of the support tower 500 comprises a moving guide rail, and the moving guide rail includes positioning holes.

The step of moving the docking apparatus 100 along an axial direction of the support tower 500 to an end of the support tower 500 away from the floating foundation 200 so that the docking apparatus 100 is fixed includes: inserting, after the docking apparatus 100 is inserted along the moving guide rail to the end of the support tower 500 away from the floating foundation 200, the fixing pin into the positioning hole to fix the docking apparatus 100 on the support tower 500.

Optionally, a moving guide rail is disposed on an outer wall of the support tower 500. By extending the moving guide rail along the axial direction, guidance is provided for the movement of the docking apparatus 100 on the outer wall, so that the docking apparatus 100 is convenient for movement adjustment.

Meanwhile, positioning holes are disposed on the moving guide rail, and the locking member 80 adopts a structural form of a fixing pin. When the docking apparatus 100 moves to the top end of the support tower 500, the fixing pin is inserted into the positioning hole on the moving guide rail, thereby locking the docking apparatus 100 by way of insertion to facilitate subsequent docking at this position.

Embodiments of the present disclosure provide a method for installing an offshore wind turbine. By using a locking manner of inserting the fixing pin into the positioning hole, a feasible manner is provided for fixation of the docking apparatus 100, facilitating automatic fixation, while guidance is provided for movement adjustment of the docking apparatus 100.

As an optional embodiment, referring to FIG. 3 in combination with FIG. 10, the annular body 10 includes a first annular body 11 and a second annular body 12 that are movably connected. The first annular body 11 and the second annular body 12 define an adjustable docking cavity. The first annular body 11 and the second annular body 12 each comprise the locking member 80. The step of moving the docking apparatus 100 along an axial direction of the support tower 500 to an end of the support tower 500 away from the floating foundation 200 and fixing the docking apparatus 100 includes:
S41, fixing the second annular body 12 and moving the first annular body 11 in the axial direction toward a side gradually away from the second annular body 12, wherein a space of the docking cavity is adjusted.
S42, after the first annular body 11 moves to the end of the support tower 500 away from the floating foundation 200, fixing the first annular body 11 and moving the second annular body 12 in the axial direction toward a side gradually approaching the first annular body 11.
S43, after the second annular body 12 moves to the end of the support tower 500 away from the floating foundation 200, fixing the second annular body 12 and together with the first annular body 11 defining an adjusted docking cavity.

Optionally, the first annular body 11 and the second annular body 12 are each provided with a locking member 80. In step S41, the locking member 80 of the first annular body 11 is disconnected from the support tower 500 and the locking member 80 of the second annular body 12 is connected to the support tower 500, thereby fixing the second annular body 12 on an outer wall of the support tower 500, and the first annular body 11 moves in the axial direction toward a side gradually away from the second annular body 12. Since the first annular body 11 and the second annular body 12 are moved away from each other in the axial direction, a space of the docking cavity formed jointly by the two is also adjusted.

In step S42, after the first annular body 11 moves to the end of the support tower 500 away from the floating foundation 200, the locking member 80 of the first annular body 11 is connected to the support tower 500 and the locking member 80 of the second annular body 12 is disconnected from the support tower 500, thereby fixing the first annular body 11 on an outer wall of the support tower 500. The second annular body 12 moves in the axial direction toward a side gradually approaching the first annular body 11, and a distance between the two gradually decreases.

In step S43, after the second annular body 12 moves to the end of the support tower 500 away from the floating foundation 200, the locking member 80 of the second annular body 12 is connected to the support tower 500. At this time, the first annular body 11 and the second annular body 12 are jointly fixed on the outer wall of the support tower 500 and are jointly located at the top end of the support tower 500. The two jointly define a docking cavity again, so that the docking cavity is adjusted, thereby providing a basis for subsequent tower docking.

Optionally, the first annular body 11 and the second annular body 12 may be connected by a hydraulic cylinder, thereby realizing relative movement between the two annular bodies.

When the docking apparatus 100 is still at a bottom of the support tower 500, after the connection between the support tower 500 and the floating foundation 200 is achieved, first, in step S41, the locking member 80 of the first annular body 11 is released so that it moves on the outer wall of the support tower 500 relative to the second annular body 12, and the second annular body 12 at this time is still locked at the bottom of the support tower 500.

Subsequently, in step S42, when the first annular body 11 gradually moves to the top end of the support tower 500, the locking member 80 of the first annular body 11 fixes it at the top end. At this time, the locking member 80 of the second annular body 12 is opened, and under the driving action of the hydraulic cylinder, the second annular body 12 moves toward the first annular body 11 at the top. Similarly, after moving to the top end of the support tower 500, in step S43, the locking member 80 is used to fix the second annular body 12 at this position, thereby completing the entire movement process of the docking apparatus 100.

Embodiments of the present disclosure provide a method for installing an offshore wind turbine. By configuring the docking apparatus 100 as the first annular body 11 and the second annular body 12 that are movably connected, movement adjustment of the docking apparatus 100 is achieved by using relative mobility of the two, so that the docking apparatus 100 has relatively high stability when moving on the outer wall of the support tower 500.

As an optional embodiment, referring to FIG. 3 in combination with FIG. 11, the compensation apparatus 300 includes a sling 90. The sling 90 is connected to the adjustment mechanism 30, and a position thereof on the adjustment mechanism 30 is adjustable. The step of installing the support tower 500 by hoisting the support tower 500 using the compensation apparatus 300 and inserting the support tower 500 into the docking cavity to be connected to the floating foundation 200 includes:
adjusting a position of the sling 90 relative to the adjustment mechanism 30, so that the sling 90 has the same extension direction as the support tower 500;
connecting the sling 90 to the support tower 500 to hoist the support tower 500.

To further improve balance stability during hoisting of the support tower 500, the position of the sling 90 of the compensation apparatus 300 is adjustable in this embodiment. Optionally, the position of the sling 90 may be adjusted by moving or rotating, and the purpose thereof is to have the same extension direction as the support tower 500, ensuring better balance stability during hoisting of the support tower 500.

Before connecting the sling 90 to the support tower 500, the position of the sling 90 on the adjustment mechanism 30 is adjusted, usually to a vertically downward state. Optionally, the sling 90 may be connected to the support tower 500 through a lifting beam disposed therebetween, thereby avoiding direct contact between the sling 90 and the support tower 500, and having better hoisting stability.

Meanwhile, for support towers 500 of different models and sizes, different hoisting point positions are provided. Therefore, by adjusting the position of the sling 90, a connection at a corresponding hoisting point position is ensured, and a stable connection with support towers 500 of different models can be formed, having better adaptability.

Embodiments of the present disclosure provide a method for installing an offshore wind turbine. By making the position of the sling 90 in the compensation apparatus 300 adjustable, the method has flexible and diverse adjustment capabilities, can better adapt to different environments, achieve a more stable connection with the support tower 500, and ensure balance stability during the hoisting process.

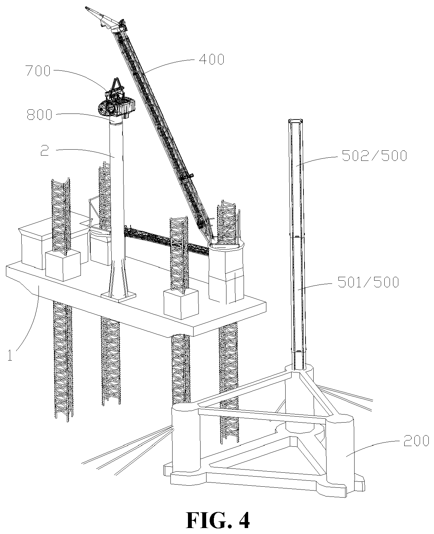

As an optional embodiment, referring to FIG. 4 to FIG. 9, before the step of installing the power generation assembly by hoisting the power generation assembly using the compensation apparatus 300 and inserting the adapter tower 800 into the docking cavity to be connected to the support tower 500, the method further includes:
providing an installation platform 1 which includes an installation column 2;
installing a nacelle assembly onto the installation column 2 by hoisting the nacelle assembly, wherein the nacelle assembly includes a nacelle 700, a hub connected to the nacelle 700, and an adapter tower 800, and the nacelle assembly is connected to the installation column 2 through the adapter tower 800;
hoisting and mounting a plurality of blades 600 onto the hub to obtain a rotor.

This embodiment is mainly for a process of disassembling various components in the power generation assembly and then transporting them to the sea for assembly. Specifically, the nacelle assembly and the plurality of blades 600 are separately transported from a dock to the sea for offshore assembly work, reducing the burden of assembly at the dock and the difficulty in offshore transportation.

First, it is necessary to dispose the installation platform 1 beside the floating foundation 200 at sea. The installation platform 1 is a fixed platform that does not float with sea waves. Optionally, the installation platform 1 may be a jack-up platform, and the installation column 2 is disposed on the installation platform 1 to provide bearing for a subsequent power generation assembly.

The nacelle assembly is hoisted onto the installation column 2, and is connected to the installation column 2 by using the adapter tower 800 in the nacelle assembly. Optionally, the nacelle 700, the hub, and the adapter tower 800 may be pre-installed on land, and then transported to the sea as a whole and hoisted onto the installation column 2, or may be disassembled into individual components and hoisted separately at sea.

The nacelle assembly is hoisted onto the installation column 2 to complete the installation of the plurality of blades 600. After the nacelle assembly is connected to the installation column 2, the blades 600 are hoisted by using the hoisting tool 400 and connected to the hub, ultimately obtaining the rotor. Optionally, for the separate hoisting of the plurality of blades 600, a single-blade clamp may be used.

Optionally, since the entire hoisting process described above is performed on the installation platform 1, and the installation platform 1 is fixed at sea and has high stability, which is different from the shaking environment when the support tower 500 is hoisted onto the floating foundation 200, the hoisting on the installation platform 1 described above may be performed without using the compensation apparatus 300.

After the rotor is obtained, the rotor, the nacelle 700, and the adapter tower 800 jointly form the power generation assembly. By using the installation platform 1, assembly of the above components at sea is achieved. Subsequently, the power generation assembly as a whole is hoisted from the installation column 2 onto the support tower 500 on the connected floating foundation 200, thereby obtaining a final wind turbine generator.

Embodiments of the present disclosure provide a method for installing an offshore wind turbine. By disposing the installation platform 1 at sea, installation of the power generation assembly at sea is achieved, improving assembly capability at sea. Meanwhile, it facilitates splitting the power generation assembly for transportation at sea, improving the convenience of transportation at sea, and reducing the burden of onshore installation and the difficulty of transportation at sea.

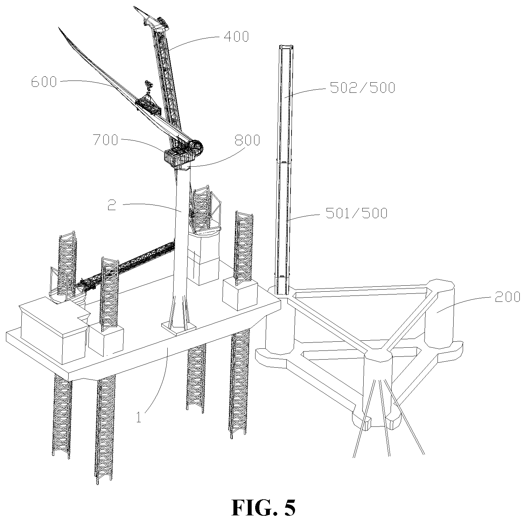

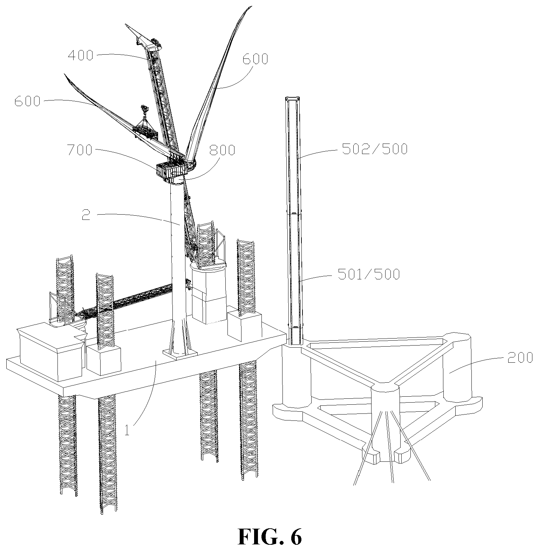

As an optional embodiment, referring to FIG. 5 and FIG. 6, a plurality of connection ports are disposed on the hub. The step of hoisting and mounting the plurality of blades 600 onto the hub to obtain the rotor includes:
rotating the hub so that an opening of any one of the connection ports faces a horizontal direction;
hoisting any one of the blades 600 along the horizontal direction to the connection port to mount the blade onto the connection port;
repeating the above process until the plurality of blades 600 are hoisted and mounted onto the plurality of connection ports, respectively.

After the nacelle assembly is hoisted onto the installation column 2, optionally, the hub is rotated by using a turning gear in the nacelle assembly, so that one of the connection ports on the hub faces the horizontal direction. A pitch bearing is usually disposed at the connection port to perform a pitch process of the blades 600.

Subsequently, one of the blades 600 is hoisted along the horizontal direction to the connection port of the hub by using the hoisting tool 400 and connected to the hub. The hub continues to be rotated so that another connection port faces the horizontal direction, and the process is repeated to respectively hoist three blades 600 onto corresponding connection ports, ultimately obtaining the rotor.

Embodiments of the present disclosure provide a method for installing an offshore wind turbine. By rotating the hub and maintaining the hoisted blade 600 in the horizontal direction, assembly of the blade 600 is achieved, which facilitates installation and connection of the blade 600 while improving the connection stability of the blade 600.

As an optional embodiment, the nacelle assembly further includes a yaw system, and the nacelle assembly is connected to the installation column 2 through the yaw system. After the step of hoisting and mounting the plurality of blades 600 onto the hub to obtain the rotor, the method further includes: rotating the nacelle 700 and the rotor by using the yaw system, so that the rotor has a hoisting space.

Optionally, the yaw system in this embodiment may be a system integrated into the nacelle, and its main function is to perform rotation adjustment on the nacelle 700 and the rotor hoisted onto the installation column 2.

During the process of installing the above blades 600 onto the hub, the orientation of the hub may first be adjusted by rotation using the yaw system to face the hoisting tool 400, thereby facilitating engagement of the blades 600.

After obtained, the nacelle 700 and the rotor need to be hoisted as a whole onto the support tower 500 on the floating foundation 200. At this time, the yaw system may be configured to rotate the nacelle 700 and the rotor on the installation column 2 to face the sea, thereby avoiding the hoisting tool 400 and the installation platform 1 structure and preventing the long blades 600 from colliding with other structures during hoisting. The yaw system is configured to orient the rotor toward a position more favorable for hoisting, providing a more adequate hoisting space.

When the power generation assembly is hoisted as a whole, the compensation apparatus 300 needs to be used at this time for hoisting to buffer shaking during hoisting onto the support tower 500, and the adapter tower 800 in the power generation assembly is used to achieve docking with the docking apparatus 100 at the top end of the support tower 500.

For the replacement of large components of a floating wind turbine, a reverse process of installation may be adopted. That is, the nacelle, three blades 600, and the adapter tower 800 are hoisted onto the installation column 2 to perform replacement work of the blades 600, and then the replaced power generation assembly as a whole is hoisted onto the support tower 500 of the floating foundation 200. There is no need to tow the floating foundation 200 or the entire unit back to the dock for component replacement work as in the prior art.

Embodiments of the present disclosure provide a method for installing an offshore wind turbine. By disposing the yaw system on the installation column 2, rotation adjustment of the power generation assembly is achieved, providing better adjustment flexibility, facilitating adjustment to a better installation position, and being conducive to completion of the offshore installation.

Embodiments of the present disclosure provide a method for installing an offshore wind turbine. The docking apparatus is installed on a floating foundation, a support tower is inserted into the docking cavity of the docking apparatus by using a compensation apparatus, and then the support tower is connected to the floating foundation, so that the docking apparatus may provide a preliminary docking position for the support tower and fix the support tower, while the compensation apparatus may buffer the hoisting process and overcome shaking during offshore operations, enabling the installation process of the support tower more stable and suitable for the offshore operating environment and satisfying the installation conditions. The power generation assembly is then hoisted by using the compensation apparatus and likewise docked and fixed through the docking apparatus, achieving the installation of the offshore wind turbine. The cooperation of the docking apparatus and the compensation apparatus improves the stability of the offshore hoisting process, provides the capability to perform offshore hoisting operations, and reduces risks during the hoisting process. In addition, the offshore installation operations avoid operations at a dock, obviating the need to replace large cranes and reinforce the dock, thereby saving installation costs.

Although the present disclosure has been described with reference to preferred embodiments, various modifications may be made thereto without departing from the scope of the present disclosure, and components therein may be replaced with equivalents. In particular, as long as there is no structural conflict, various technical features mentioned in each of the embodiments may be combined in any manner. The present disclosure is not limited to the specific embodiments disclosed herein, but includes all technical solutions falling within the scope of the claims.

## Claims

1. A method for installing an offshore wind turbine, comprising:
providing a docking apparatus (100), movably mounting the docking apparatus (100) on a floating foundation (200), wherein the docking apparatus (100) comprises an annular body (10) and a docking cavity extending through the annular body (10);
installing a support tower (500) by hoisting the support tower (500) and inserting the support tower (500) into the docking cavity to be connected to the floating foundation (200);
moving the docking apparatus (100) along an axial direction of the support tower (500) to an end of the support tower (500) away from the floating foundation (200), so as to movably mount the docking apparatus (100) on an outer wall of the support tower (500); and
installing a power generation assembly which comprises a rotor, a nacelle (700), and an adapter tower (800) connected to the nacelle (700), by hoisting the power generation assembly and inserting the adapter tower (800) into the docking cavity to be connected to the support tower (500).

2. The method according to claim 1, wherein
before the installing a support tower (500) by hoisting the support tower (500) and inserting the support tower (500) into the docking cavity to be connected to the floating foundation (200), the method further comprises:
connecting a compensation apparatus (300) to a hoisting tool (400), the hoisting tool (400) being connected to a to-be-hoisted object through the compensation apparatus (300);
the installing a support tower (500) by hoisting the support tower (500) and inserting the support tower (500) into the docking cavity to be connected to the floating foundation (200) comprises:
installing the support tower (500) by hoisting the support tower (500) using the compensation apparatus (300) and inserting the support tower (500) into the docking cavity to be connected to the floating foundation (200); and
the installing a power generation assembly which comprises a rotor, a nacelle (700), and an adapter tower (800) connected to the nacelle (700), by hoisting the power generation assembly and inserting the adapter tower (800) into the docking cavity to be connected to the support tower (500) comprises:
installing the power generation assembly by hoisting the power generation assembly using the compensation apparatus (300) and inserting the adapter tower (800) into the docking cavity to be connected to the support tower (500).

3. The method according to claim 2, wherein the compensation apparatus (300) comprises a fixed mechanism (20) and an adjustment mechanism (30), the adjustment mechanism (30) being disposed on the fixed mechanism (20) and configured to move relative to the fixed mechanism (20) to absorb swaying of the to-be-hoisted object.

4. The method according to claim 2, wherein after the installing the power generation assembly by hoisting the power generation assembly using the compensation apparatus (300) and inserting the adapter tower (800) into the docking cavity to be connected to the support tower (500), the method further comprises:
installing the power generation assembly by hoisting the power generation assembly using the compensation apparatus (300), so as to position the power generation assembly at a predetermined position;
replacing at least one of components of the power generation assembly; and
installing the replaced power generation assembly again by hoisting the replaced power generation assembly using the compensation apparatus (300) and inserting the adapter tower (800) into the docking cavity to be connected to the support tower (500).

5. The method according to any one of claims 2 to 4, wherein the support tower (500) comprises a plurality of tower sections, and the installing the support tower (500) by hoisting the support tower (500) using the compensation apparatus (300) and inserting the support tower (500) into the docking cavity to be connected to the floating foundation (200) comprises:
installing a first tower section (501) by hoisting the first tower section (501) using the compensation apparatus (300) and inserting the first tower section (501) into the docking cavity to be connected to the floating foundation (200);
moving the docking apparatus (100) along the axial direction to an end of the first tower section (501) away from the floating foundation (200) to fix the docking apparatus (100);
installing a second tower section (502) by hoisting the second tower section (502) using the compensation apparatus (300) and inserting the second tower section (502) into the docking cavity to be connected to the first tower section (501);
repeating the above steps to hoist remaining tower sections until all the tower sections are connected to each other, so as to obtain the support tower (500).

6. The method according to claim 5, wherein the docking apparatus (100) comprises a limiting body (40) which is disposed at an end of the annular body (10) and protrudes toward the docking cavity and which comprises a limiting protrusion (41), at least one of the tower sections comprises a connecting plate protruding from an outer wall thereof, and the connecting plate comprises a connecting hole; and
the installing a second tower section (502) by hoisting the second tower section (502) using the compensation apparatus (300) and inserting the second tower section (502) into the docking cavity to be connected to the first tower section (501) comprises:
engaging a connecting plate of the second tower section (502) with the limiting body (40), wherein the limiting protrusion (41) is inserted into the connecting hole, so that the limiting body (40) supports the second tower section (502).

7. The method according to claim 6, wherein the docking apparatus (100) comprises a telescopic assembly (50), one end of the telescopic assembly (50) being connected to the limiting body (40), and the other end of the telescopic assembly (50) being connected to the annular body (10);
after the engaging a connecting plate of the second tower section (502) with the limiting body (40), wherein the limiting protrusion (41) is inserted into the connecting hole, so that the limiting body (40) supports the second tower section (502), the method further comprises:
controlling the telescopic assembly (50) to contract toward the docking cavity, so that the limiting body (40) and the second tower section (502) are driven to move toward the first tower section (501) until the second tower section (502) is connected to the first tower section (501).

8. The method according to claim 6, wherein the docking apparatus (100) comprises a rotating member (60) which is disposed at one end of the annular body (10) and connected to the limiting body (40); and
before the engaging a connecting plate of the second tower section (502) with the limiting body (40), wherein the limiting protrusion (41) is inserted into the connecting hole, so that the limiting body (40) supports the second tower section (502), the method further comprises:
controlling, until a mating reference line of the limiting body (40) matches a mating reference line of the first tower section (501), the rotating member (60) to rotate along a circumferential direction of the first tower section (501) so as to drive the limiting body (40) to rotate.

9. The method according to claim 3, wherein the compensation apparatus (300) comprises a rotary member (70) which is connected to the adjustment mechanism (30) and configured to drive the adjustment mechanism (30) to rotate;
the installing a second tower section (502) by hoisting the second tower section (502) using the compensation apparatus (300) and inserting the second tower section (502) into the docking cavity to be connected to the first tower section (501) comprises:
driving, until a mating reference line of the second tower section (502) matches a mating reference line of the first tower section (501), the adjustment mechanism (30) to rotate by using the rotary member (70), so as to drive the second tower section (502) to rotate.

10. The method according to any one of claims 1 to 4, wherein the docking apparatus (100) comprises a locking member (80) which is disposed on the annular body (10); and
the moving the docking apparatus (100) along an axial direction of the support tower (500) to an end of the support tower (500) away from the floating foundation (200), so as to movably mount the docking apparatus (100) on an outer wall of the support tower (500) comprises:
fixing the docking apparatus (100) on the support tower (500) by using the locking member (80).

11. The method according to claim 10, wherein the locking member (80) comprises a fixing pin, the support tower (500) comprises a moving guide rail disposed on the outer wall of the support tower (500), and the moving guide rail is provided with a positioning hole;
the moving the docking apparatus (100) along an axial direction of the support tower (500) to an end of the support tower (500) away from the floating foundation (200) so as to movably mount the docking apparatus (100) on an outer wall of the support tower (500) comprises:
inserting, after the docking apparatus (100) is moved along the moving guide rail to the end of the support tower (500) away from the floating foundation (200), the fixing pin into the positioning hole to fix the docking apparatus (100) on the support tower (500).

12. The method according to any one of claims 1 to 4, wherein the annular body (10) comprises a first annular body (11) and a second annular body (12) which are movably connected to each other and together define an adjustable docking cavity; and
the moving the docking apparatus (100) along an axial direction of the support tower (500) to an end of the support tower (500) away from the floating foundation (200) so as to movably mount the docking apparatus (100) on an outer wall of the support tower (500) comprises:
fixing the second annular body (12);
moving the first annular body (11) along the axial direction toward a side gradually away from the second annular body (12), wherein a space of the docking cavity is adjusted;
fixing, after the first annular body (11) moves to the end of the support tower (500) away from the floating foundation (200), the first annular body (11);
moving the second annular body (12) along the axial direction toward a side gradually approaching the first annular body (11); and
fixing, after the second annular body (12) moves to the end of the support tower (500) facing away from the floating foundation (200), the second annular body (12), so that the first annular body (11) and the second annular body (12) define an adjusted docking cavity.

13. The method according to claim 3, wherein the compensation apparatus (300) comprises a sling (90) which is connected to the adjustment mechanism (30) and has an adjustable position on the adjustment mechanism (30); and
the installing the support tower (500) by hoisting the support tower (500) using the compensation apparatus (300) and inserting the support tower (500) into the docking cavity to be connected to the floating foundation (200) comprises:
adjusting a position of the sling (90) relative to the adjustment mechanism (30), so that the sling (90) has a same extending direction as the support tower (500); and
connecting the sling (90) to the support tower (500) to hoist the support tower (500).

14. The method according to any one of claims 2 to 4, wherein, before the installing the power generation assembly by hoisting the power generation assembly using the compensation apparatus (300) and inserting the adapter tower (800) into the docking cavity to be connected to the support tower (500), the method further comprises:
providing an installation platform (1) which comprises an installation column (2);
installing a nacelle assembly onto the installation column (2) by hoisting the nacelle assembly, wherein the nacelle assembly comprises the nacelle (700), a hub connected to the nacelle (700), and the adapter tower (800), and the nacelle assembly is connected to the installation column (2) through the adapter tower (800); and
hoisting and mounting a plurality of blades (600) onto the hub to obtain the rotor.

15. The method according to claim 14, wherein the hub comprises a plurality of connection ports; and
the hoisting and mounting a plurality of blades (600) onto the hub to obtain the rotor comprises:
rotating the hub, so that an opening of any one of the connection ports faces a horizontal direction;
hoisting, along the horizontal direction, any one of the blades (600) to the connection port to mount the blade onto the connection port; and
repeating the above process until the plurality of blades (600) are hoisted and mounted onto the plurality of connection ports respectively.

16. The method according to claim 14, wherein the nacelle assembly further comprises a yaw system, the nacelle assembly is connected to the installation column (2) through the yaw system; and
after the hoisting and mounting a plurality of blades (600) onto the hub to obtain the rotor, the method further comprises:
rotating, by using the yaw system, the nacelle (700) and the rotor which has a hoisting space.
